Europäisches Patentamt

European Patent Office

Office européen des brevets

(11) Publication number: **0 187 510 B1**

# EUROPEAN PATENT SPECIFICATION

(45) Date of publication of patent specification: **23.10.91**  (51) Int. Cl.⁵: **H04N 9/89, H04N 9/81**

(21) Application number: **85309323.5**

(22) Date of filing: **20.12.85**

(54) Processing time-compressed component video signals.

(30) Priority: **25.12.84 JP 279427/84**

(43) Date of publication of application:
**16.07.86 Bulletin 86/29**

(45) Publication of the grant of the patent:
**23.10.91 Bulletin 91/43**

(84) Designated Contracting States:
**AT DE FR GB NL**

(56) References cited:
**EP-A- 0 149 244**
**EP-A- 0 174 633**

(73) Proprietor: **SONY CORPORATION**
**7-35 Kitashinagawa 6-Chome Shinagawa-ku**
**Tokyo 141(JP)**

(72) Inventor: **Yoshinaka, Tadaaki c/o Sony Corporation**
**Patents Division 6-7-35 Kitasinagawa**
**Shinagawa-ku Tokyo 141(JP)**
Inventor: **Inoue, Takao c/o Sony Corporation**
**Patents Division 6-7-35 Kitasinagawa**
**Shinagawa-ku Tokyo 141(JP)**
Inventor: **Tomita, Kazuo c/o Sony Corporation**
**Patents Division 6-7-35 Kitasinagawa**
**Shinagawa-ku Tokyo 141(JP)**

(74) Representative: **Cotter, Ivan John et al**
**D. YOUNG & CO. 10 Staple Inn**
**London WC1V 7RD(GB)**

**Description**

This invention relates to apparatus for processing a plurality of component video signals which are time-compressed. More particularly, but not exclusively, the invention relates to a write clock pulse generator used for a time base corrector, for example a write clock pulse generator used for an apparatus for recording and/or reproducing a video signal which is time-compressed and multiplexed.

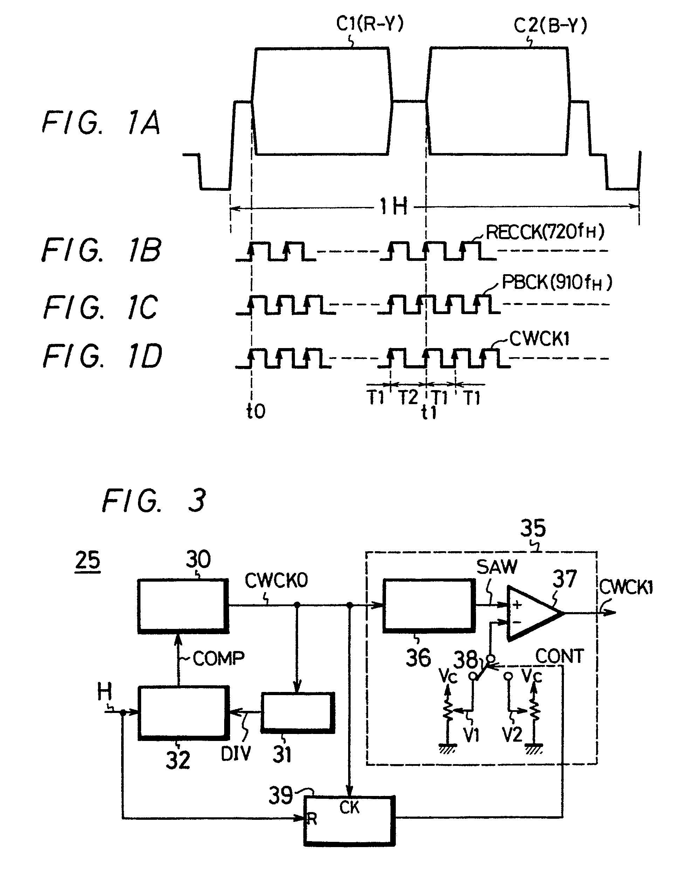

In a previously proposed video tape recorder (VTR), in a recording mode, component signals (such as a luminance signal, colour difference signals and so on) forming a video signal are time-compressed, time-multiplexed as shown in Figure 1A of the accompanying drawings and then recorded. In a reproduction mode, the time-compressed and time-multiplexed signals are divided, time-expanded and then employed to generate a reproduced video signal.

In the above-mentioned VTR, the frequency of a write clock pulse signal used for carrying out the time-compressing and multiplexing in the recording mode and the frequency of a write clock pulse signal used for carrying out the time-dividing and expanding in the reproduction mode are made to be the same as each other, whereby the respective reproduced component signals are synchronised with one another.

However, the fact that the frequency of the clock signal used during recording and the frequency of the clock signal used during reproduction are made to be the same as each other means that the frequency of the clock signal used during reproduction is restricted by the frequency of the clock signal used during recording. In practice, if respective circuits formed as integrated circuits (ICs) and the like and having the same design concept can be applied to VTRs of different specifications, the system can be made common to the VTRs so that the VTRs can be produced with ease and at low manufacturing cost. Accordingly, there is a case for using existing circuits even if this leads to the result that the frequency of the clock signal used during recording and the frequency of the clock signal used during reproduction become different.

When a digital signal is processed by a circuit on the reproducing side (the digital signal being, for example, balance-modulated), in most of the circuits a clock signal having a frequency which is multiple of a colour subcarrier frequency (for example, 4 times) is employed. If the frequency of the clock signal used for the time division and expansion upon reproduction or playback is selected to be the same as the frequency of the clock signal for the digital processing, many advantages in circuit arrangement and signal processing can be brought about. Accordingly, it may be considered that even if the frequency of the clock signal used in the time division and expansion upon reproduction becomes different from the frequency of the clock signal used in time-compressing and multiplexing upon recording, the frequency of the clock signal used for time division and expansion upon reproduction coincides with a multiple of the colour subcarrier frequency.

However, if a frequency $N_1 f_H$ (for example, 720 $f_H$, where $f_H$ is the horizontal scanning frequency) of a clock signal RECCK (Figure 1B) used during recording is made different from a frequency $N_2 f_H$ - (for example, 910 $f_H$) of a clock signal PBCK (Figure 1C) used during reproduction, when the phases of the clock signals RECC and PBCK are made coincident at the beginning of a component signal $C_1$ (for example, a colour difference signal R-Y) which is time-compressed into the first half H/2 of a horizontal scanning period or horizontal interval 1H as, for example, shown in Figure 1A, the phases of the clock signals RECCK and PBCK are not coincident at the beginning of a component signal $C_2$ (for example, a colour difference signal B-Y) which is time-compressed into the latter half H/2. As a result, the time expanded and then composed video signal causes a colour displacement relative to the original video signal. For instance, when the first component signal $C_1$ is the colour difference signal R-Y and the second component signal $C_2$ is the colour difference signal B-Y, a complete colour signal cannot be obtained due to the above mentioned colour displacement.

European Patent Application Publication No EP-A-0 149 244, which was published on 24 July 1985 and forms part of the state of the art as regards the present application only by virtue of EPC Article 54(3), discloses apparatus for processing a plurality of component video signals which are time-compressed into one horizontal scanning period, the apparatus comprising:

means for sampling the time-compressed component video signals in response to a sampling clock pulse signal which is phase-locked with a horizontal synchronising signal of the reproduced video signals;

means for time-expanding the time-compressed component video signals from the sampling means by writing the samples, at the frequency of the sampling clock pulse signal, into a memory, and reading out the samples from said memory at the frequency of a read clock signal;

a generator for generating a control signal representing a starting position; and

a phase shifter for shifting a phase of said sampling clock pulse signal, in response to the control signal, to attempt to conform the phase of the sampling clock pulse signal to a pilot signal mixed with the reproduced video signals.

According to the present invention there is provided apparatus for processing and time-correcting a plurality of component video signals reproduced from a video tape recorder, which signals were recorded sequentially in a time-compressed manner in one horizontal scanning period, the apparatus comprising:

means for sampling the reproduced time-compressed component video signals in response to an initial sampling clock pulse signal which is phase-locked with a horizontal synchronising signal of the reproduced video signals;

means for time-expanding the time-compressed component video signals from the sampling means by writing the samples, at the frequency of a time-corrected sampling clock pulse signal derived from said initial sampling clock pulse signal, into a memory, and reading out said samples from said memory at the frequency of a read clock signal which is derived from a reference signal having a stable period;

a generator for generating a control signal representing a starting position of each of the reproduced time-compressed component video signals in that said control signal changes at the end of a time period determined by a fixed number of pulses of said initial sampling clock pulse signal; and

a phase shifter for shifting a phase of said initial sampling clock pulse signal and producing said time-corrected sampling clock pulse signal in response to the control signal so that the time-corrected sampling clock pulse signal is generated in synchronism with the start time points of the respective reproduced time-compressed component video signals.

Preferred embodiments of this invention described hereinbelow provide a write clock pulse generator used for a time base corrector in which, even when a frequency of a time-compressing and multiplexing sampling clock pulse at a recording side and a frequency of a write clock pulse used in time dividing and expanding are different from each other, the phases of component signals can be made coincident with each other upon time expansion. In the preferred embodiments, the sampling clock frequency at a reproducing side is not restricted by a sampling clock frequency at a recording side so that the same circuit arrangement can be applied to various kinds of reproducing apparatus. The preferred embodiments provide a write clock pulse generator for a time base corrector which is suitable to be applied to a video tape recorder or other video recording and/or reproducing apparatus.

The invention will now be further described, by way of illustrative and non-limiting example, with reference to the accompanying drawings, in which like references designate like elements and parts throughout, and in which:

Figures 1A to 1D are respective waveform diagrams for explaining a phase relationship between a time-compressed and multiplexed signal and sampling clock signals;

Figure 2 is a block diagram showing an example of a time base corrector to which embodiments of the present invention can be applied;

Figure 3 is a block diagram showing a write clock pulse generator used for a time base corrector embodying the present invention;

Figures 4A to 4D are respective waveform diagrams for explaining the operation of respective circuit sections shown in Figure 3; and

Figure 5 is a block diagram showing another embodiment of the present invention.

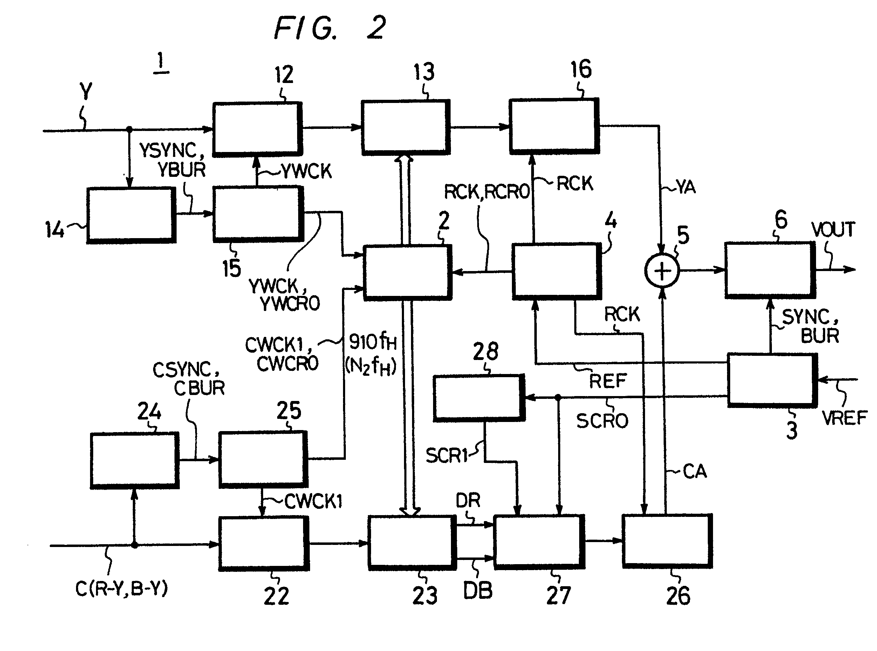

Figure 2 is a block diagram showing a time base corrector in which a write clock pulse generator embodying this invention is employed. Figure 2 shows the overall circuit arrangement of a time base corrector (TBC) 1. A luminance signal Y and a chrominance signal C are reproduced, respectively, from different tracks of a record medium, such as a magnetic tape, by different magnetic heads and are fed to the time base corrector 1. The luminance signal Y is recorded on one of two adjacent tracks of the magnetic tape, while the chrominance signal C is formed of colour difference signals P-Y and B-Y which are time-compressed to H/2 and are recorded on the other track. The frequency $N_1 f_H$ of a sampling clock signal used during recording is selected to be, for example, $720 f_H$.

The reproduced luminance signal Y is converted to a digital signal by an analog-to-digital (A/D) converter circuit 12 and then fed to a memory 13. The reproduced luminance signal Y also is fed to a synchronising separator circuit 14 in which a synchronising signal YSYNC and a burst signal YBUR are separated and then fed to a luminance signal write clock signal generator circuit 15. The write clock signal generator circuit 15 generates a clock signal YWCK which has a frequency of, for example, $910 f_H$ and which will start at a predetermined phase of the burst signal YBUR. The clock signal YWCK is supplied to the A/D converter circuit 12 as a sampling pulse signal and to a memory control circuit 2 as a luminance write clock signal. The write clock generator circuit 15 further generates a luminance write zero clear signal YWCR0 on the basis of a horizontal synchronising signal H and the signal YWCR0 is fed to the memory control circuit 2. The timing of the luminance write zero clear signal YWCR0 is selected to be at a point in time immediately before the video signal of the reproduced luminance signal Y is generated.

When the memory control circuit 2 is supplied with the luminance write zero clear signal YWCR0, it specifies a write start address of the memory 13 and allows the memory 13 sequentially to store therein picture element data of the reproduced luminance signal Y by specifying memory areas of the memory 13 sequentially in synchronism with the write clock signal YWCK.

The reproduced chrominance signal C is stored in a memory 23 by means of a circuit arrangement substantially similar to that described above. That is, the reproduced chrominance signal C is converted to a digital signal by an A/D converter circuit 22 and then fed to the memory 23. The reproduced chrominance signal C also is supplied to a synchronising separator circuit 24 in which a synchronising signal CSYNC and a burst signal CBUR are separated and then fed to a chrominance write clock generator circuit 25. The write clock generator circuit 25 generates a clock signal CWCK1 having a frequency $N_2 f_H$ equal, for example, to $910 f_H$. The clock signal CWCK1 is supplied to the A/D converter circuit 22 as a sampling pulse signal and to the memory control circuit 2 as a chrominance write clock signal. Further, the write clock generator circuit 25 generates a chrominance write zero clear signal CWCR0 on the basis of the horizontal synchronising signal and delivers the signal CWCR0 to the memory control circuit 2.

Accordingly, when the memory control circuit 2 is supplied with the chrominance write zero clear signal CWCR0, it specifies a write start address of the memory 23 and allows the memory 23 sequentially to store therein picture element data of the reproduced chrominance signal C by specifying memory areas sequentially in synchronism with the write clock signal CWCK1.

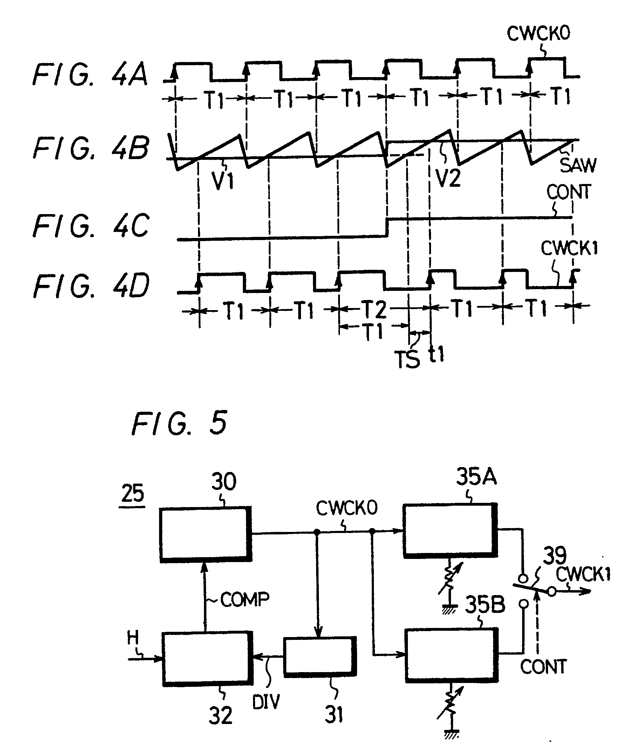

According to an embodiment of the present invention, the chrominance write clock signal generator circuit 25 is constructed as shown in Figure 3, which is a block diagram showing in detail the construction of a section of the chrominance write clock generator circuit 25 for generating the write clock signal CWCK1.

Referring to Figure 3, a voltage controlled oscillator (VCO) 30 generates an oscillatory output signal CWCK0 having the frequency $N_2 f_H$ of the write clock signal and supplies it to a phase shifter circuit 35 and to a frequency divider circuit 31. The frequency divider circuit 31 divides the oscillatory output signal CWCK0 by $N_2$ to produce a frequency-divided signal DIV. The frequency-divided signal DIV is phase-compared with the horizontal synchronising signal H of a frequency $f_H$ formed from the reproduced chrominance signal C in a phase comparator circuit 32 and the oscillatory output signal CWCK0 of the VCO 30 is phase-controlled in response to the phase difference COMP therebetween. Thus, the VCO 30 delivers to the phase shifter circuit 35 and to the frequency divider circuit 31 the oscillatory output signal CWCK0 which has a time base fluctuation similar to that of the reproduced chrominance signal C, as shown in Figure 4A.

In the phase shifter circuit 35, a sawtooth generator circuit 36 is supplied with the oscillatory output signal CWCK0 and generates a sawtooth waveform signal SAW (Figure 4B) which begins to increase its level starting from each leading edge of the oscillatory output signal CWCK0. The sawtooth waveform signal SAW is fed to one input terminal of a comparator circuit 37. The comparator circuit 37 is supplied at another input terminal with a d c voltage V1 or V2 through a switching circuit 38. The compared output signal from the comparator circuit 37 is supplied to the A/D converter circuit 22 and to the memory control circuit 2 (Figure 2) as the chrominance write clock signal CWCK1.

When the d c voltage V1 is fed to the comparator circuit 37, the chrominance write clock signal CWCK1 becomes a signal which has, as shown in the left hand portion of Figure 4D, a period T1 which is the same as that of the oscillatory output signal CWCK0 (Figure 4A). Figure 4 illustrates a state in which the oscillatory output signal CWCK0 has no time base fluctuation. When the d c voltage V2 (which is of a higher voltage level than the d c voltage V1) is supplied to the comparator circuit 37, the write clock signal CWCK1 becomes a signal having the same period T1 as that of the oscillatory output signal CWCK0, as shown in the right hand portion of Figure 4D. However, just after the d c voltage fed to the comparator circuit 37 is switched from V1 to V2, when the switching circuit 38 is changed over by a switching control signal CONT (Figure 4C), the rising period of the write clock signal CWCK1 becomes T2. Accordingly, by switching the logic level of the switching control signal CONT, the phase of the leading edge of the write clock signal CWCK1 is displaced forcibly by a time TS (= T2 - T1) shown in Figure 4D.

The switching control signal CONT switches its logic level in such a manner that the rising time point t1 at which the phase displacement occurs may coincide with a start time point t1 of the colour difference signal B-Y of the latter half of the reproduced chrominance signal C, as shown in Figure 1D. This may be achieved, for example, in that the number of pulses or periods of the oscillatory output signal CWCK0 from the VCO 30 is counted by a counter 39 and, when such number reaches a predetermined number, the logic level of the switching control signal CONT, which is produced by the counter, is inverted. The counter 39 is reset by, for example, the horizontal synchronising signal H.

The timing at which the logic level of the control signal CONT is inverted such that the start time point t0 (Figure 1D) of the colour difference signal R-Y is synchronised with the write clock signal CWCK1 can be detected on the basis of, for example, the chrominance write zero clear signal CWCR0.

Consequently, as shown in Figure 1D, the chrominance write clock signal CWCK1 is generated for both of the colour difference signals R-Y and B-Y in synchronism with their start time points t0 and t1, so as to store the picture element data of the colour difference signals R-Y and B-Y, which are synchronised with each other, in the memory 23.

Turning back to Figure 2, on the basis of a reference video signal VREF delivered from the outside, a signal generator circuit 3 generates a reference signal REF which is fed to a read clock generator circuit 4. The reference signal REF has a stable period. In response to the reference signal REF, the read clock generator circuit 4 generates a read clock signal RCK having a frequency $N_2 f_H$ substantially the same as the write clock signals YWCK and CWCK1. The read clock signal RCK is fed to the memory control circuit 2. Further, in response to the reference signal REF, the read clock generator circuit 4 generates and supplies a read zero clear signal RCR0 to the memory control circuit 2.

When the memory control circuit 2 is supplied with the read zero clear signal RCR0, it specifies the memory area at the write start address as read address data for the luminance signal memory 13 and the picture element data stored in the memory 13 is read out sequentially in synchronism with the read clock signal RCK and then fed sequentially to a digital-to-analog (D/A) converter circuit 16. The picture element data read out is converted to an analog signal YA by the D/A converter circuit 16 and then fed to an adding circuit 5.

When the memory control circuit 2 is supplied with the read zero clear signal RCR0 it specifies the memory area at the address in which the first picture element data of the colour difference signal R-Y is stored and the memory area at the address in which the first picture element data of the colour difference signal B-Y is stored as read address data for the chrominance signal memory 23. Thereafter, the picture element data DR of the colour difference signal B-Y and the picture element data DB of the colour difference signal R-Y stored in the memory 23 are read out and delivered alternately and sequentially to a frequency converter circuit 27 in synchronism with the read clock signal RCK. Thus, the reading out of the data is carried out at a period of $\frac{1}{2}$ for the luminance signal Y. Accordingly, the time-expanded and divided picture element data DR and DB are fed from the memory 23 to the frequency converter circuit 27.

The frequency converter circuit 27 is supplied with a reference colour subcarrier signal SCR0 directly from the signal generator circuit 3 and also with a reference colour subcarrier signal SCR1 which is provided by phase-shifting the signal SCR0 in a 90° phase shifter circuit 28. The reference colour subcarrier signal SCR0 and the reference colour subcarrier signal SCR1 are balance-modulated by the colour difference signal picture element data DR and DB in a digital fashion, generating a digital carrier chrominance signal which is fed to a D/A converter circuit 26. The D/A converter circuit 26 converts it to an analog signal CA and supplies the signal CA to the adding circuit 5.

The adding circuit 5 is operative to add the luminance signal YA, the time base of which was corrected, and the time-expanded, divided and modulated in quadrature bi-phase system carrier chrominance signal CA. The added signal from the adding circuit 5 is fed to a processor 6. In the processor 6, the synchronising signal SYNC and the burst signal BUR from the signal generator circuit 3 are added to the signal from the adding circuit 5 and the output level thereof is adjusted and then delivered as a composite video signal VOUT.

According to the circuit arrangement described above, in synchronism with the synchronising signal YSYNC contained in the reproduced luminance signal Y, the picture element data of the reproduced luminance signal Y is converted to digital data by the A/D converter circuit 12 while the time base fluctuation thereof is accompanied and then stored sequentially in the memory 13. The data is read out sequentially and fed to the D/A converter circuit 16 in response to the read clock signal RCK having the stable period based on the reference signal REF. Thus, the luminance signal YA, the time base of which is corrected, is fed to the adding circuit 5.

On the other hand, in synchronism with the synchronising signal CSYNC contained in the reproduced chrominance signal C, the picture element data of the reproduced chrominance signal C is converted sequentially to digital data by the A/D converter circuit 22 while the time base fluctuation thereof is accompanied and then stored sequentially in the memory 23. The stored data is time-expanded by the read clock signal RCK at every colour difference signal R-Y and B-Y component DR and DB and then fed to the frequency converter circuit 27. The data read out is balance-modulated by the frequency converter circuit 27 in a digital fashion and fed to the D/A converter circuit 26. Thus, the carrier chrominance signal CA, the time base of which is corrected, is supplied to the adding circuit 5.

The reproduced luminance signal YA and the carrier chrominance signal CA with the time base corrected are added together by the adding circuit 5 and the synchronising signal SYNC and the burst signal BUR are added thereto by the processor 6, thus delivering the composite video signal VOUT from the output terminal.

According to the time base corrector of Figure 2, using the chrominance write clock generator circuit 25 shown in Figure 3, even when the chrominance write clock signal CWCK1 has a frequency different from the frequency of the clock signal at the recording side, the write clock signal CWCK1 can be generated in synchronism with both start time points t0 and t1 of the colour difference signals R-Y and B-Y contained in the reproduced chrominance signal C, and synchronisation between the picture element data of the colour difference signals R-Y and B-Y stored in the memory 23 can be established. Therefore, it is possible to prevent the output video signal VOUT, which is modulated in accordance with an orthogonal bi-phase system and then added to the luminance signal YA, from being displaced in colour.

Figure 5 is a block diagram showing another embodiment of the present invention. In Figure 5, like parts corresponding to those of Figure 3 are designated by the same references and will not be described in detail. In the case of Figure 5, the chrominance write clock generator circuit 25 includes two phase shifter circuits 35A and 35B, each of which is formed of a sawtooth generator circuit and a comparator circuit (as shown in Figure 3). The phase shifter circuits 35A and 35B are operative to shift the oscillatory output signal CWCK0 from the VCO 30 and in this case, the shift amount of the phase shifter circuit 35B is selected to be large as compared with that of the phase shifter circuit 35A. The changing-over of a switching circuit 39 is controlled by the switching control signal CONT such that when the colour difference signal R-Y is reproduced, the output signal from the phase shifter circuit 35A is delivered, while when the colour difference signal B-Y is reproduced, the output signal from the phase shifter circuit 35B is delivered. Accordingly, by controlling the timing of the switching of the switching circuit 39, the clock pulse generator circuit 25 generates the write clock signal CWCK1 shown in Figure 4D.

When the clock pulse generator circuit 25 shown in Figure 5 is used, the colour difference signals R-Y and B-Y can be stored in the memory 23 in similar manner to the way in which this is accomplished in the case of the clock pulse generator circuit 25 of Figure 3, thus preventing the output video signal VOUT from being displaced in colour.

While the above-described embodiments employ a time-compressed and multiplexed signal that is formed such that the colour difference signal R-Y is time-compressed and recorded in the first half H/2 of the horizontal interval, while the colour difference signal B-Y is time-compressed and recorded in the latter half thereof, the invention is not limited to a signal of the above form but can be applied to various other time-compressed and multiplexed signals. For example, the invention can be applied to a time-compressed and multiplexed signal in which the luminance signal Y and the colour difference signals R-Y and B-Y are recorded, respectively, on succeeding portions H/2, H/4 and H/4 of one horizontal period or interval. In short, regardless of the kind of time-compressed and multiplexed signal, this invention can be applied to a case in which the sampling clock frequency $N_2f_H$ at the recording side and the sampling clock frequency $N_1f_H$ at the reproducing side are different from each other.

According to the embodiments of the present invention as set forth above, since the sampling clock signals are generated in synchronism with the start time points of the respective component signals at the reproducing side, the respective component signals can be composed under the condition that the respective signals are synchronised with one another. Furthermore, even in apparatus in which the sampling clock frequency at the recording side and the sampling clock frequency at the reproducing side are different from each other, it is possible to obtain a synchronised video signal. Therefore, since the sampling clock frequency at the reproducing side is not restricted by the sampling clock frequency at the recording side, the same circuit arrangement can be applied to various reproducing apparatus.

## Claims

1. Apparatus for processing and time-correcting a plurality of component video signals (C(R-Y, B-Y)) reproduced from a video tape recorder, which signals were recorded sequentially in a time-compressed manner in one horizontal scanning period, the apparatus comprising:

   means (22) for sampling the reproduced time-compressed component video signals (C-(R-Y, B-Y)) in response to an initial sampling clock pulse signal (CWCK0) which is phase-locked with a horizontal synchronising signal of the reproduced video signals;

   means (2, 3, 4, 23) for dime-expanding the time-compressed component video signals from the sampling means (22) by writing the samples, at the frequency of a time-corrected sampling clock pulse signal (CWCK1) derived from said initial sampling clock pulse signal (CWCK0), into a memory (23), and reading out said samples from said memory (23) at the frequency of a read clock signal (RCK) which is derived from a reference signal (VREF) having a stable period;

a generator (39) for generating a control signal (CONT) representing a starting position of each of the reproduced time-compressed component video signals (C(R-Y), (CB-Y)) in that said control signal changes at the end of a time period determined by a fixed number of pulses of said initial sampling clock pulse signal (CWCK0); and

a phase shifter (35; 35A, 35B) for shifting a phase of said initial sampling clock pulse signal (CWCK0) and producing said time-corrected sampling clock pulse signal (CWCK1) in response to the control signal (CONT) so that the time-corrected sampling clock pulse signal (CWCK1) is generated in synchronism with the start time points (to) and t1) of the respective reproduced time-compressed component video signals (C(R-Y), C(B-Y)).

2. Apparatus according to claim 1, in which the phase shifter (35) comprises a plurality of phase control circuits (V1, V2), one of the phase control circuits being selectively changeable by the control signal (CONT).

3. Apparatus according to claim 2, in which the phase shifter (35) comprises a sawtooth waveform generator (36) for producing a sawtooth waveform signal (SAW) from the initial sampling clock pulse signal (CWCK0) and a comparator (37) for comparing a voltage of the sawtooth waveform signal (SAW) with an output voltage of each of said plurality of phase control circuits (V1, V2).

4. Apparatus according to claim 3, in which the phase control circuits are reference voltage sources (V1, V2).

5. Apparatus according to any one of claims 1 to 4, in which the control signal generator comprises a counter (39) for counting a predetermined number of pulses of the initial sampling clock pulse signal (CWCK0), the counter being arranged to be reset by a reproduced synchronising signal (H).

## Revendications

1. Appareil pour traiter et corriger dans le temps une pluralité de signaux de composantes vidéo (C(R-Y, B-Y)) reproduits à partir d'un enregistreur à bande vidéo, ces signaux étant enregistrés séquentiellement en étant comprimés dans le temps dans une période de balayage horizontal, l'appareil comprenant :

un moyen (22) pour échantillonner les signaux de composantes vidéo comprimés dans le temps reproduits (C(R-Y, B-Y)) en réponse à un signal d'impulsion d'horloge d'échantillonnage initial (CWCK0) qui est verrouillé en phase avec un signal de synchronisation horizontal des signaux vidéo reproduits ;

un moyen (2, 3, 4, 23) pour dilater dans le temps les signaux de composantes vidéo comprimés dans le temps qui proviennent du moyen d'échantillonnage (22) en écrivant les échantillons à la fréquence d'un signal d'impulsion d'horloge d'échantillonnage corrigé dans le temps (CWCK1) qui est dérivé dudit signal d'impulsion d'horloge d'échantillonnage initial (CWCK0) dans une mémoire (23) et en extrayant lesdits échantillons de ladite mémoire (23) à la fréquence du signal d'horloge de lecture (RCK) qui est dérivé d'un signal de référence (VREF) qui a une période stable ;

un générateur (39) pour générer un signal de commande (CONT) qui représente une position de début de chacun des signaux de composantes vidéo comprimés dans le temps reproduits (C(R-Y, B-Y)), le signal de commande changeant à la fin d'une période de temps déterminée par un nombre fixe d'impulsions dudit signal d'impulsion d'horloge d'échantillonnage initial (CWCK0) ; et

un circuit de décalage de phase (35 ; 35A, 35B) pour décaler une phase dudit signal d'impulsion d'horloge d'échantillonnage initial (CWCK0) et pour produire ledit signal d'impulsion d'horloge d'échantillonnage corrigé dans le temps (CWCK1) en réponse au signal de commande (CONT) de telle sorte que le signal d'impulsion d'horloge d'échantillonnage corrigé dans le temps (CWCK1) soit généré en synchronisation avec les points d'instant de début (t0 et t1) des signaux de composantes vidéo comprimés dans le temps reproduits respectifs (C(R-Y, B-Y)).

2. Appareil selon la revendication 1, dans lequel le circuit de décalage de phase (35) comprend une pluralité de circuits de commande de phase (V1, V2), un des circuits de commande de phase pouvant être sélectivement changé par le signal de commande (CONT).

3. Appareil selon la revendication 2, dans lequel le circuit de décalage de phase (35) comprend un générateur de forme d'onde en dents de scie (36) pour produire un signal de forme d'onde en dents de scie (SAW) à partir du signal d'impulsion d'horloge d'échantillonnage initial (CWCK0) et un comparateur (37) pour comparer une tension du signal de forme d'onde en dents de scie (SAW) à une tension de sortie de chacun de ladite pluralité de circuits de commande de phase (V1, V2).

4. Appareil selon la revendication 3, dans lequel les circuits de commande de phase sont des sources de tension de référence (V1, V2).

5. Appareil selon l'une quelconque des revendications 1 à 4, dans lequel le générateur de signal de commande comprend un compteur (39) pour compter un nombre prédéterminé d'impulsions du signal d'impulsion d'horloge d'échantillonnage initial (CWCK0), le compteur étant agencé pour être remis à l'état initial par un signal de synchronisation reproduit (H).

**Patentansprüche**

1. Vorrichtung zur Verarbeitung und zur Zeitkorrektur mehrerer von einem Videorekorder reproduzierter Videosignalkomponenten (C(R-Y, B-Y)), die zeitkomprimiert in einer horizontalen Abtastperiode sequentiell gespeichert sind, bestehend aus

einer Abtasteinrichtung (22) zum Abtasten der reproduzierten zeitkomprimierten Videosignalkomponenten (C(R-Y, B-Y)) nach Maßgabe eines Anfangs-Abtasttaktimpulssignals (CWCK0), das mit einem horizontalen Synchronisiersignal der reproduzierten Videosignale phasenstarr verriegelt ist,

einer Einrichtung (2, 3, 4, 23) zur Zeitdehnung der aus der Abtasteinrichtung (22) kommenden zeitkomprimierten Videosignalkomponenten durch Einschreiben der Abtastproben in einen Speicher (23) mit der Frequenz eines zeitkorrigierten aus dem Anfangs-Abtasttaktimpulssignal (CWCK0) abgeleiteten Abtasttaktimpulssignals (CWCK1) und durch Auslesen dieser Abtastproben aus dem Speicher (23) mit der Frequenz eines aus einem Referenzsignal (VREF) mit stabiler Periode abgeleiteten Lesetaktsignals (RCK),

einem Generator (39) zur Erzeugung eines die Startposition jedes der reproduzierten zeitkomprimierten Videosignalkomponenten (C(R-Y, B-Y)) repräsentierenden Steuersignals (CONT), das sich am Ende einer durch eine feste Zahl von Impulsen des Anfangs-Abtasttaktimpulssignals (CWCK0) bestimmten Zeitperiode ändert,

und einem Phasenschieber (35; 35A, 35B) zur Phasenverschiebung des Anfangs-Abtasttaktimpulssignals (CWCK0) und zur Erzeugung des zeitkorrigierten Abtasttaktimpulssignals in Abhängigkeit von dem Steuersignal (CONT) in der Weise, daß das zeitkorrigierte Abtasttaktimpulssignal (CWCK1) synchron mit den Startzeitpunkten (to und t1) der jeweiligen reproduzierten zeitkomprimierten Videosignalkomponenten (C(R-Y, B-Y)) erzeugt wird.

2. Vorrichtung nach Anspruch 1, bei der der Phasenschieber (35) mehrere Phasensteuerschaltungen (V1, V2) aufweist, von denen eine durch das Steuersignal (CONT) selektiv veränderbar ist.

3. Vorrichtung nach Anspruch 2, bei der der Phasenschieber (35) einen Sägezahngenerator (35) zur Erzeugung eines Sägezahnsignals (SAW) aus dem Anfangs-Abtasttaktimpulssignals (CWCK0) aufweist sowie einen Komparator (37) zum Vergleichen der Spannung des Sägezahnsignals (SAW) mit der Ausgangsspannung jeder der mehreren Phasensteuerschaltungen (V1, V2).

4. Vorrichtung nach Anspruch 3, bei der die Phasensteuerschaltungen Referenzspannungsquellen (V1, V2) sind.

5. Vorrichtung nach einem der Ansprüche 1 bis 4, bei der Steuersignalgenerator einen Zähler (39) zum Zählen einer vorbestimmten Anzahl von Impulsen des Anfangs-Abtasttaktimpulssignals (CWCK0) aufweist, der so angeordnet ist, daß er durch ein reproduzierten Synchronisiersignal (H) zurückgesetzt wird.

FIG. 1A

C1(R-Y)　　　C2(B-Y)

1H

FIG. 1B　　RECCK(720fH)

FIG. 1C　　PBCK(910fH)

FIG. 1D　　CWCK1

T1　T2　T1　T1

t0　　t1

FIG. 3

25

30　CWCK0

COMP

H

32　DIV　31

35

SAW　37　CWCK1

36　38　CONT

Vc　Vc

V1　V2

39　CK

R

FIG. 2

EP 0 187 510 B1

*FIG. 4A*

*FIG. 4B*

*FIG. 4C*

*FIG. 4D*

*FIG. 5*